Europäisches Patentamt

European Patent Office

Office européen des brevets

(11) Publication number: 0 380 319
A1

# (12) EUROPEAN PATENT APPLICATION

(21) Application number: 90300736.7

(22) Date of filing: 24.01.90

(51) Int. Cl.⁵: B65D 81/24, C08L 77/06, C08L 77/10, C08K 5/09, C08L 101/00

(30) Priority: 27.01.89 GB 8901760
06.07.89 US 375957

(43) Date of publication of application:
01.08.90 Bulletin 90/31

(84) Designated Contracting States:
AT BE CH DE DK ES FR GB GR IT LI LU NL SE

(71) Applicant: CMB FOODCAN PLC
Woodside Perrywood Walk
Worcester WR5 1EQ(GB)

(72) Inventor: Cochran, Michael Alexander
20 Hawksworth Close, Grove
Wantage, Oxfordshire OX12 0NU(GB)
Inventor: Folland, Rickworth
Rose Cottage, Longcot
Faringdon, Oxfordshire SN7 7TL(GB)
Inventor: Nicholas, James William
12 Segsbury Road
Wantage, Oxfordshire OX12 9XR(GB)
Inventor: Robinson, Melvin Edward Riddell
26 Fairfield Close, Grove
Wantage, Oxfordshire OX12 ONX(GB)
Inventor: Harris, Nigel James
19 Argosy Close
Chalgrove, Oxfordshire OX9 7RU(GB)

(74) Representative: Pendlebury, Anthony et al
PAGE, WHITE & FARRER 54 Doughty Street
London WC1N 2LS(GB)

(54) Improvements in and relating to packaging.

(57) According to the invention, a composition for packaging use comprises -

(a) a polymer;

(b) an oxidisable polymer that is formally a condensation polymer of one or more compounds of the general formula (I),

$$H_2N-R_1-R_2-R_3-NH_2 \quad (I)$$

wherein each of $R_1$ and $R_3$, which may be the same or different, represents a non-aromatic group containing a saturated carbon atom adjacent to the respective $-NH_2$ group and wherein $R_2$ represents a substituted or unsubstituted arylene group,

with one or more compounds of the general formula (II),

$$HO_2C-R_4-R_5-R_6-CO_2H \quad (II)$$

wherein each of $R_4$ and $R_6$, which may be the same or different, represents a direct bond or a non-aromatic group containing at least one carbon atom and wherein $R_5$ represents a substituted or unsubstituted arylene group,

the molar ratio of the compound of the general formula (I), or of such compounds taken together, to the compound of the general formula (II), or of such compounds taken together, being

1: $x_{II}$ where $x_{II} \geq 0.05$; and

(c) a metal catalyst for the oxidation of the oxidisable polymer.

The composition may be used in a wall or a layer thereof, or as a headspace scavenger.

EP 0 380 319 A1

## IMPROVEMENTS IN AND RELATING TO PACKAGING

The present invention relates to packaging, especially packaging of oxygen-sensitive materials, most especially of foods and beverages. One method of protecting such materials is by the use of oxygen scavenging either in the wall of a package or in the head-space.

In our copending UK patent application 88 15699.7 (and corresponding European patent application No. 88306175.6), we have described and claimed a wall for a package, which wall comprises, or includes a layer comprising, a composition comprising a polymer and having oxygen-scavenging properties, characterised in that the composition scavenges oxygen through the metal-catalysed oxidation of an oxidisable organic component thereof.

In a second aspect, the invention of the aforesaid UK patent application provides a composition for packaging use which comprises a polymer, an oxidisable organic component, and a metal catalyst for the oxidation of the oxidisable organic component.

The composition provided by the aforesaid invention has three major uses, namely as the material for a wall or a layer of a wall, as a masterbatch for blending with another polymer for such use, and as a head-space scavenger.

In a third aspect the aforesaid invention provides a package, whether rigid, semi-rigid, collapsible, lidded, or flexible or a combination of these, a wall of which is a wall as provided by the invention in its first aspect or comprises entirely, as a layer, or as a blend the composition provided by the invention in its second aspect.

The UK patent application corresponds to EPC patent application 88 306175.6 and PCT patent application GB/88 00532. The UK patent application has been published under number GB 2 207 439A. The entire disclosure of the aforesaid patent applications is incorporated herein by this reference.

However, it is convenient here to note the following points regarding the aforesaid invention:-

(1) It is possible in principle for the oxygen-scavenging properties of a wall or composition to be affected by illumination. However, scavenging which is highly dependent on such illumination is difficult to apply commercially. Therefore, all references to oxidation, oxidisability, and oxygen-scavenging properties, refer to the dark or else to conditions of irradiation not appreciably contributing to oxygen-scavenging.

(2) The oxidisable organic component may be an oxidisable polymer. The use of an oxidisable polymer as the oxidisable organic component has the advantage, broadly speaking, over the use of an oxidisable non-polymeric component that it is less likely to affect adversely the properties of a non-oxidisable polymer with which it is blended. It is possible for an oxidisable polymer to be used as the sole polymer in the composition, serving a dual function as polymer and oxidisable organic component.

(3) It is of course possible for two or more polymers, two or more oxidisable organic components, or two or more catalysts to be used. It is possible also for a metal catalyst to be used in combination with a non-metal catalyst. For instance, with some oxidisable organic components an organic peroxide may be used in combination with the metal catalyst.

(4) By "wall for a package" is meant (except where the context indicates otherwise) not only a wall when incorporated into a package structure but also packaging materials capable of forming walls, such as package bases, packaging sheet, and so on.

(5) The word "catalyst" is used in a general way readily understood by the man skilled in the art, not necessarily to imply that it is not consumed at all in the oxidation. It is indeed possible that the catalyst may be converted cyclically from one state to another and back again as successive quantities of oxidisable component are consumed by successive quantities of oxygen. However, it may be that some is lost in side reactions, possibly contributing directly to oxygen-scavenging in small measure, or indeed that the "catalyst" is more properly described as an initiator (e.g. generating free radicals which through branching chain reactions lead to the scavenging of oxygen out of proportion to the quantity of "catalyst").

(6) The wall may be a rigid one, a flexible sheet, or a clinging film. It may be homogenous or a laminate or coated with other polymers. If it is laminated or coated, then the scavenging property may reside in a layer of the wall the permeance of which, for oxygen, would be relatively high in the absence of scavenging and which alone would not perform very satisfactorily but which performs satisfactorily in combination with one or more other layers which have a relatively low permeance but negligible or insufficient oxygen-scavenging properties. A single such layer could be used on the outside of the package since this is the side from which oxygen primarily comes when the package is filled and sealed. However, such a layer to either side of the scavenging layer would reduce consumption of scavenging capacity prior to filling and sealing.

(7) Polyesters and polyolefins are especially suitable as non-oxidisable polymeric components, especially ethylene terephthalate or ethylene naphthalate polyesters.

In the aforesaid patent applications, it is stated that particularly interesting oxidisable organic components are polyamides, especially those containing groups of the formula
- arylene-$CH_2$-NH-CO-, conveniently in the form of
-NH-$CH_2$-arylene-$CH_2$-NH-CO-alkylene-CO-units. Metal catalysis is advantageously provided by compounds of cobalt, copper and rhodium.

It is appropriate to note here that many polyamides are known per se, e.g. from UK patent specification 1428197, European patent application 65278A2, and US patent 4122802.

We have now discovered that it is advantageous in the exercising of our aforesaid invention in all its aspects to use an oxidisable polymer that is formally a condensation polymer of one or more compounds of the general formula (I),

$H_2N$-$R_1$-$R_2$-$R_3$-$NH_2$      (I)

wherein each of $R_1$ and $R_3$, which may be the same or different, represents a non-aromatic group containing a saturated carbon atom adjacent to the respective -$NH_2$ group and wherein $R_2$ represents a substituted or unsubstituted arylene group,
with one or more compounds of the general formula (II),

$HO_2C$-$R_4$-$R_5$-$R_6$-$CO_2H$      (II)

wherein each of $R_4$ and $R_6$, which may be the same or different, represents a direct bond or a non-aromatic group containing at least one carbon atom and wherein $R_5$ represents a substituted or unsubstituted arylene group,
the molar ratio of the compound of the general formula (I), or of such compounds taken together, to the compound of the general formula (II), or of such compounds taken together, being
$1 : x_{II}$ where $x_{II} \geq 0.05$.

An advantage of the use of an oxidisable polymer in accordance with the present invention over the use of a polyamide derived from an alkylenediamine as described in our copending applications is that the refractive index of a polymer containing the arylene group $R_5$ will in general be more similar in refractive index to non-oxidisable polyesters containing arylene groups in the acid component thereof, such as phthalate and naphthalate polyesters. Thus, blends of the polyesters with the oxidisable polymers used in accordance with the present invention will in general have better clarity.

The oxidisable polymer used in accordance with the present invention may include, formally, as components among others the following:
compounds of the general formula (III),

HO-$R_7$-OH      (III)

wherein $R_7$ is a group containing a saturated carbon atom adjacent to each -OH group; and
compounds of the general formula (IV),

$HO_2C$-$R_8$-$CO_2H$      (IV)

wherein $R_8$ represents a non-aromatic group containing at least one carbon atom.

Among preferred groups $R_1$ to $R_8$, there may be mentioned the following:-

For $R_1$ and $R_3$, methylene groups.

For $R_2$ and $R_5$, phenylene groups, especially m-phenylene groups.

For $R_7$, alkylene groups of from 1 to 10 carbon atoms, especially the ethylene group.

For $R_8$, alkylene groups of from 1 to 10 carbon atoms, especially the n-butylene group.

Except where the context necessarily indicates otherwise, all of the convenient, advantageous, and preferred features referred to in the aforesaid copending applications are likewise convenient, advantageous, or preferred in relation to the present invention.

The present invention will now be further described, by way of illustration only, by means of the following Experiments.


## EXPERIMENTS


## POLYMER PREPARATION

Polymers were synthesised as follows:

Polymer (i): m-xylylenediamine, isophthalic acid, and adipic acid in a molar ratio of 1 : 01 : 0.9 were used as monomers.

(Note: m-xylylenediamine is $H_2NCH_2$-m-$C_6H_4$-$CH_2NH_2$, isophthalic acid is $HO_2C$-m-$C_6H_4$-$CO_2H$; and adipic acid is $HO_2C(CH_2)_4CO_2H$.)

The copolymerisation was effected without solvent or catalyst under gentle reflux for two hours. The product was liquid when hot, and solidified to a mass on cooling. The product was broken up and stirred in acetone, filtered, and air-dried under suction at room temperature.

Polymer (ii): this was a repeat preparation of polymer (i).

Polymer (iii): this polymer was prepared like polymer (i) except that the molar ratios of m-xylylenediamine, isophthalic acid and adipic acid were 1 : 0.2 : 0.8.

Polymer (iv): this polymer was prepared like polymer (i) except that the molar ratios of m-xylylenediamine, isophthalic acid, and adipic acid were 1 : 0.4 : 0.6.

Polymer (v): this was a repeat prepartion of polymer (iv).

Polymer (vi): this polymer was prepared like polymer (i) except that the molar ratios of m-xylylenediamine, isophthalic acid, and adipic acid were 1: 0.5 : 0.5.

## STANDARD SAMPLES FOR TEST

Each of these polymers (i) to (vi) were made up into one or more standard samples according to the A,B and/or C procedures below. The samples are designated in a self-evident manner: a standard sample made up from polymer (i) by procedure A is called sample (i)A; one made up from polymer (iii) by procedure C is called sample (iii)C; and so on.

Procedure A 5g of the respective polymer were weighed out.

Procedure B 5g of the respective polymer were suspended in approximately 20 cm$^3$ acetone, and 0.125mg of copper were added in the form of a solution of copper acetate in 1 cm$^3$ methanol. The mixture was stirred and then dried on a warm hotplate.

Procedure C 5g of the respective polymer were suspended in approximately 20 cm$^3$ acetone, and 1 mg of cobalt was added in the form of a solution of cobalt acetate in methanol. The mixture was stirred and then dried on a warm hotplate.

## TESTING PROCEDURE

Each of the five samples was enclosed with air in a glass bottle of capacity 5 cm$^3$ with a rubber septum and aluminium closure. The headspace gas was sampled as a function of time and analysed for oxygen.

The results are summarised in the Table. The results show the marked oxygen-scavenging effect of polymers (i) to (vi), being oxidisable polymers to be used in accordance with the invention, in the presence of metal catalyst. The tests on the A samples are uncatalysed "controls".

| Sample | $x_{II}$ | Catalyst | Time (1)/day Time (2)/day | Volume fraction of $O_2$ in head-space gas at times (1) and (2) |
|---|---|---|---|---|
| (i)A | 0.1 | – | 7 | 12% |
|  |  |  | 13 | 12% |
| (i)B | 0.1 | 25 ppm Cu | 7 | 5% |
|  |  |  | 13 | 3%. |
| (i)C | 0.1 | 200 ppm Co | 7 | 6% |
|  |  |  | 13 | 5% |
| (ii)A | 0.1 | – | 7 | 16% |
|  |  |  | 14 | 15% |
| (ii)B | 0.1 | 25 ppm Cu | 7 | 2% |
|  |  |  | 14 | 2% |
| (ii)C | 0.1 | 200 ppm Co | 7 | 1% |
|  |  |  | 14 | 1% |
| (iii)A | 0.2 | – | 7 | 17% |
|  |  |  | 14 | 17% |
| (iii)B | 0.2 | 25 ppm Cu | 7 | 6% |
|  |  |  | 14 | 4% |
| (iii)C | 0.2 | 200 ppm Co | 7 | 9% |
|  |  |  | 14 | 7% |

| Sample | $x_{II}$ | Catalyst | Time (1)/day Time (2)/day | Volume fraction of $O_2$ in head-space gas at times (1) and (2) |
|---|---|---|---|---|
| (iv)A | 0.4 | – | 7 – | 15% – |
| (iv)B | 0.4 | 25 ppm Cu | 7 – | 7% – |
| (v)A | 0.4 | – | 7 14 | 15% 12% |
| (v)B | 0.4 | 25 ppm Cu | 7 14 | 2% 2% |
| (v)C | 0.4 | 200 ppm Co | 7 14 | 2% 2% |
| (vi)A | 0.5 | – | 7 14 | 18% 18% |
| (vi)B | 0.5 | 25 ppm Cu | 7 14 | 8% 8% |
| (vi)C | 0.5 | 200 ppm Co | 7 14 | 11% 9% |

**Claims**

1. A wall for a package, which wall comprises, or includes a layer comprising, a composition comprising a polymer and having oxygen scavenging properties, characterised in that the composition scavenges oxygen through the metal-catalysed oxidation of an oxidisable polymer that is formally a condensation polymer of one or more compounds of the general formula (I),

$H_2N-R_1-R_2-R_3-NH_2$     (I)

wherein each of $R_1$ and $R_3$, which may be the same or different, represents a non-aromatic group containing a saturated carbon atom adjacent to the respective $-NH_2$ group and wherein $R_2$ represents a substituted or unsubstituted arylene group,

with one or more compounds of the general formula (II),

6

$HO_2C$-$R_4$-$R_5$-$R_6$-$CO_2H$     (II)

wherein each of $R_4$ and $R_6$, which may be the same or different, represents a direct bond or a non-aromatic group containing at least one carbon atom and wherein $R_5$ represents a substituted or unsubstituted arylene group,

the molar ratio of the compound of the general formula (I), or of such compounds taken together, to the compound of the general formula (II), or of such compounds taken together, being

$1 : x_{II}$ where $x_{II} \geq 0.05$.

2. A wall according to claim 1, wherein the oxidisable polymer is formally a condensation polymer of one or more compounds the general formula (I) as aforesaid and one or more compounds of the general formula (II) as aforesaid, together with one or more compounds of the general formula (IV),

$HO_2C$-$R_8$-$CO_2H$     (IV)

wherein $R_8$ represents a non-aromatic group containing at least one carbon atom, the molar ratios of the compounds of the general formulas (I), (II) and (IV),

or respectively of such compounds taken together, being $1 : x_{II} : x_{IV}$ where $(x_{II} + x_{IV})$ is essentially equal to 1.0 and $x_{II}$ is in the range from 0.05 to 1.0.

3. A wall according to claim 1 or claim 2, wherein the polymer is distinct from the oxidisable polymer and is formally a condensation polymer of one or more aromatic dicarboxylic or polycarboxylic acids with one or more compounds containing at least two alcoholic hydroxy groups per molecule.

4. A composition for packaging use, which comprises-

(a) a polymer;

(b) an oxidisable polymer that is formally a condensation polymer of one or more compounds of the general formula (I),

$H_2N$-$R_1$-$R_2$-$R_3$-$NH_2$     (I)

wherein each of $R_1$ and $R_3$, which may be the same or different, represents a non-aromatic group containing a saturated carbon atom adjacent to the respective -$NH_2$ group and wherein $R_2$ represents a substituted or unsubstituted arylene group,

with one or more compounds of the general formula (II),

$HO_2C$-$R_4$-$R_5$-$R_6$-$CO_2H$     (II)

wherein each of $R_4$ and $R_6$, which may be the same or different, represents a direct bond or a non-aromatic group containing at least one carbon atom and wherein $R_5$ represents a substituted or unsubstituted arylene group,

the molar ratio of the compound of the general formula (I), or of such compounds taken together, to the compound of the general formula (II), or of such compounds taken together, being

$1 : x_{II}$ where $x_{II} \geq 0.05$; and

(c) a metal catalyst for the oxidation of the oxidisable polymer.

5. A composition according to claim 4, wherein the oxidisable polymer has the features specified in claim 2.

6. A composition according to claim 4, wherein the polymer has the features specified in claim 3.

7. A package comprising a wall according to any one of claims 1 to 3, or a wall which comprises entirely, as a layer, or as a blend a composition according to any one of claims 4 to 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 288 972 (MITSUBISHI GAS CHEMICAL CO.) * Claims * ----- | 1-7 | B 65 D 81/24<br>C 08 L 77/06<br>C 08 L 77/10<br>C 08 K 5/09<br>C 08 L 101/00 |
| | | | **TECHNICAL FIELDS SEARCHED (Int. Cl.5)**<br><br>C 08 K<br>C 08 L<br>B 65 D |

The present search report has been drawn up for all claims

| Place of search | Date of completion of the search | Examiner |
|---|---|---|
| THE HAGUE | 02-05-1990 | HOFFMANN K.W. |